# EUROPEAN PATENT SPECIFICATION

(11) **EP 3 169 566 B1**
(45) Date of publication and mention of the grant of the patent: **30.10.2019**
(21) Application number: 14742186.1
(22) Date of filing: 16.07.2014
(51) Int. Cl.: B60S 1/40

(54) **WINDSCREEN WIPER DEVICE**
SCHEIBENWISCHERVORRICHTUNG
ESSUIE-GLACE

(43) Date of publication of application: 24.05.2017
(73) Proprietor: Federal-Mogul S.A., 6790 Aubange (BE)
(72) Inventor: FRISCIONI, Thomas, F-54135 Mexy (FR)
(74) Representative: Hooiveld, Arjen Jan Winfried
(86) International application number: PCT/EP2014/065270
(87) International publication number: WO 2016/008523

(56) References cited:
- US-A1- 2010 005 609
- US-A1- 2011 247 166
- US-A1- 2012 227 206
- US-A1- 2013 104 334
- US-B1- 8 707 506

## Description

The present invention relates to a windscreen wiper device of the flat blade type comprising an elastic, elongated carrier element, as well as an elongated wiper blade of a flexible material, which can be placed in abutment with a windscreen to be wiped, which wiper blade includes at least one longitudinal groove, in which groove a longitudinal strip of the carrier element is disposed, which windscreen wiper device comprises a connecting device for an oscillating arm, wherein said oscillating arm can be pivotally connected to said connecting device about a pivot axis near a free end of said oscillating arm, with the interposition of a joint part, wherein said joint part is detachably connected to said connecting device by engaging protrusions of said connecting device, at the location of said pivot axis, in recesses provided in said joint part.

In use, said oscillating arm is connected to a mounting head mounted on a drive shaft, wherein said oscillating arm at one end thereof is pivotally connected to the mounting head by means of a pivot pin and at another end thereof is connected to said wiper blade placed in abutment with said windscreen to be wiped. In use, the shaft rotates alternately in a clockwise and in a counter-clockwise sense carrying the mounting head into rotation also, which in turn draws the oscillating arm into rotation and by means of said connecting device moves the wiper blade. Said oscillating arm can thus oscillate to-and-from between a first reversal position and a second reversal position. Said first reversal position may be identified as a position, wherein the arm members extend parallel to a windscreen to be wiped and are located near a lower edge of said windscreen to be wiped. Also, said second reversal position may be formulated as a position, wherein the arm members extend also parallel to a windscreen to be wiped and are located in a central region or near a side edge of said windscreen to be wiped.

The present invention also relates to a method for manufacturing such a windscreen wiper device.

It is noted that the present invention is not restricted to automobiles, but also refers to rail coaches and other (fast) vehicles.

Such a windscreen wiper device is generally known from European patent publication no. 1 403 156 of the same Applicant. This prior art windscreen wiper device is designed as a "yokeless" wiper device or "flat blade", wherein no use is made of several yokes pivotally connected to each other, but wherein the wiper blade is biased by the carrier element, as a result of which it exhibits a specific curvature. In this prior art windscreen wiper device the joint part comprises at least one resilient tongue engaging in a correspondingly shaped hole provided in the oscillating arm, wherein the resilient tongue is rotatable along an hinge axis between an outward position retaining the wiper blade onto the oscillating arm and an inward position releasing the wiper blade from the oscillating arm. In order to connect the wiper blade onto the oscillating arm, the resilient tongue is initially pushed in against a spring force - as if it were a push button - and then allowed to spring back into the hole provided in the oscillating arm, thus snapping, that is clipping the resilient tongue into the hole. By subsequently pushing in again the resilient tongue against the spring force, the wiper blade may be released from the oscillating arm.

Document US8707506 B1 discloses a windscreen wiper device with a connecting device for connecting a wiper blade to several types of windscreen wiper arms.

The object of the invention is to provide an improved windscreen wiper device at minimum costs - without using complex machinery and additional tools -, while the connecting device and the oscillating arm can be interconnected in a reliable and secure manner.

In order to accomplish that objective, a windscreen wiper device of the type referred to in the introduction further comprises said protrusions of said connecting device being provided with co-axial through holes, wherein
- an upper surface of said joint part comprises a recess arranged to accommodate a L-shaped shoulder provided near said free end of an oscillating arm of a first type, wherein said co-axial through holes are arranged to receive a transverse pivot pin provided near said free end of said oscillating arm of the first type, and wherein a side of said joint part is arranged to abut a leg of said L-shaped shoulder disposed at an end thereof and facing a windscreen to be wiped;
- said joint part comprises at least one resilient tongue arranged to engage into a correspondingly shaped hole provided in a base of a U-shaped cross-section of an oscillating arm of a second type, wherein said resilient tongue is hingeable about a hinge axis between a inward position, wherein said wiper blade can be released from said oscillating arm of the second type, and an outward position, wherein said wiper blade can be retained on said oscillating arm of the second type;
- said joint part is provided with a free end having a recess arranged to accommodate said free end of an oscillating arm of a third type, wherein said joint part comprises at least one protrusion extending laterally from a longitudinal side of said joint part, said protrusion being arranged to hook behind a correspondingly shaped protrusion on said oscillating arm of the third type for blocking a longitudinal movement of said wiper blade with respect to said oscillating arm of the third type, wherein a cover is detachably connected to said joint part, characterized in that an upper surface of said cover comprises a recess arranged to accommodate
- a rod-shaped oscillating arm of a fifth type;
- a L-shaped shoulder near said free end of an oscillating arm of the first type,
wherein said cover comprises a cap provided with a protrusion in use extending in downward direction towards a windscreen to be wiped, and wherein said downwardly extending protrusion is adapted to engage in a correspondingly shaped hole provided in said oscillating arm of the fifth type for retaining said wiper blade onto said oscillating arm of the fifth type.

Preferably, said connecting device is made in one piece of plastic and comprises an elongated flat base part, as well as a top part having a U-shaped cross-section, wherein a base and legs of said U-shaped cross-section define a channel between them arranged to accommodate a hook-shaped oscillating arm, as will be explained hereunder.

Preferably, said joint part is detachably connected to said connecting device particularly through a snapping/clipping operation. Further, the protrusions that function as bearing surfaces are spaced far apart, so that the forces exerted thereon will be relatively low. The protrusions extend outwards on either side of said connecting device, wherein the protrusions and their co-axial through holes are at least substantially cylindrical.

Preferably, said protrusion on said joint part is resilient in order to snappingly connect said oscillating arm of the third type onto the joint part.

Said joint part is arranged to be connected to said connecting device for different types of interconnection between the wiper blade and the oscillating arm, wherein said joint part is subsequently connected to said connecting device by pivotally engaging protrusions of said connecting device, at the location of said pivot axis, in recesses provided in said joint part, and wherein the oscillating arm can be subsequently connected to said joint part. The essence of the present invention is that said connecting device and said joint part each are a universal connection for each type of interconnection between the wiper blade and the oscillating arm. A same type of said joint part to be connected to a same type of said connecting device may be used for each different type of interconnection between the wiper blade and the oscillating arm. The advantage achieved by the invention is that a unit consisting of said wiper blade, said connecting device and said joint part connected to said connecting device can be manufactured for each and every type of interconnection between said wiper blade and said oscillating arm. Thus, a universal connection between the wiper blade and the oscillating arm is obtained, so that car drivers are given the possibility to buy also non-original cheap wiper blades fitting the original oscillating arms on their cars.

The present invention thus provides a universal connecting unit (consisting of said connecting device and said joint part) that is firmly attached to the oscillating arm of at least three types, i.e. a so-called "sidelock" connection, "bayonet" connection and "toplock" connection.

In a preferred embodiment of a windscreen wiper device in accordance with the invention said joint part has an at least substantially U-shaped cross-section at the location of its connection to said connection device, wherein said joint part in each leg of said U-shaped cross-section is provided with said recess provided co-axially with said pivot axis, and wherein said co-axial recesses of said legs of said U-shaped cross-section and said co-axial through holes of said protrusions of said connecting device are arranged to receive said pivot pin of said oscillating arm of the first type. In other words, the diameter of the pivot pin is adapted to the diameter of the bearing holes or said co-axial through holes of said protrusions of said connecting device and to the diameter of said recesses provided in legs of the U-shaped cross-section of said joint part. Thus, said oscillating arm of the first type is provided with an extension comprising said pivot pin and said L-shape shoulder projecting out in the direction of said pivot pin and across said wiper blade and at the end of which is disposed said leg facing the windscreen to be wiped. Particularly, said joint part has a width of approximately 22 mm at the location of said L-shaped shoulder.

A side of said joint part facing away from the oscillating arm of the first type cooperates with a stop being formed by an inner wall of said leg, while securing of the wiper blade on the pivot pin toward the other side is taken over by the oscillating arm of the first type itself, as the pivot pin is fastened thereto.

In a further preferred embodiment of a windscreen wiper device according to the invention said joint part has an at least substantially U-shaped cross-section at the location of its connection to said connection device, wherein a base of said U-shaped cross-section of said joint part comprises said resilient tongue extending outwardly. Although said hinge axis could very well be located near an inner edge of said joint part, said hinge axis is preferably located near an outer edge of said joint part in order to avoid unintentional separation of the wiper blade from the oscillating arm of the second type.

In a further preferred embodiment of a windscreen wiper device in accordance with the invention wherein said joint part has an at least substantially U-shaped cross-section at the location of its connection to said connection device, wherein a base of said U-shaped cross-section of said joint part comprises said recess arranged to accommodate said free end of said oscillating arm of a third type. Particularly, said free end of said joint part is resilient and can pivot about a hinge axis between a first position for mounting or dismounting said free end of the oscillating arm of the third type into or from said recess in the base of the U-shaped cross-section of said joint part, and a second position for connecting said free end of the oscillating arm of the third type to said joint part. In the alternative (instead of said free end being resilient and pivotable) said protrusion(s) on said joint part is/are resilient. For connecting said oscillating arm of the third type to said joint part said oscillating arm of the third type is pivoted relative to said joint part in an inclined position with respect to said wiper blade, so that said protrusion on said joint part is hooking behind said correspondingly shaped protrusion on said oscillating arm of the third type, wherein said oscillating arm is pivoted back relative to said joint part in a parallel position with respect to said wiper blade, so that a free end of said oscillating arm is snapped in said recess at the free end of said joint part.

In a further preferred embodiment of a windscreen wiper device according to the invention said connecting device comprises a longitudinal channel arranged to receive an oscillating arm of the fourth type comprising two longitudinal arm sections connected to each other by means of a curved intermediate section. Particularly, said joint part has an at least substantially U-shaped cross-section at the location of its connection to said connection device, wherein said longitudinal channel, a base and legs of the U-shaped cross-section of said joint part are arranged to receive a longitudinal arm section of said oscillating arm of the fourth type that in use is facing towards a windscreen to be wiped. In other words, said longitudinal arm section in use facing towards a windscreen to be wiped is introduced inside said channel and between said base and said legs of the U-shaped cross-section of said joint part. Said channel preferably has a closed circumference.

In a further preferred embodiment of a windscreen wiper device in accordance with the invention said free end of said joint part is movable between an open position, wherein said wiper blade can be released from said oscillating arm of the fourth type, and an closed position, wherein said wiper blade can be retained on said oscillating arm of the fourth type. Particularly, said free end of said joint part is hingeable between said open and closed positions about a longitudinal axis of the windscreen wiper device. More in particular, the joint part comprises a cylindrical protrusion extending in longitudinal direction from one end thereof, while the free end thereof comprises a cylindrical recess extending in longitudinal direction as well for receiving said protrusion, such that said free end can be hingeably mounted onto said joint part.

Preferably, said cover is detachably connected to said joint part through a snapping/clipping operation. Said oscillating arm of the first type without a cover and with a cover used mutually differ in a distance between legs of the U-shaped cross-section of said oscillating arms, namely 19 mm and 22 mm, respectively.

In a further preferred embodiment of a windscreen wiper device in accordance with the invention said cap is preferably hingeably connected to said cover between a closed position, wherein said wiper blade is retained onto said oscillating arm of the fifth type, and an open position, wherein said wiper blade can be released from said oscillating arm of the fifth type.

In a further preferred embodiment of a windscreen wiper device according to the invention said cover has an at least substantially U-shaped cross-section at the location of its connection to said joint part, wherein said recess is provided in a base of the U-shaped cross-section.

In a further preferred embodiment of a windscreen wiper device in accordance with the invention said cover comprises two spaced-apart guiding protrusions extending upwardly from an upper surface of said cover, wherein said guiding protrusions are adapted to receive said oscillating arm of the fifth type between them.

As indicated, the present invention also relates to a method for manufacturing a windscreen wiper device of the flat blade type comprising an elastic, elongated carrier element, as well as an elongated wiper blade of a flexible material, which can be placed in abutment with a windscreen to be wiped, which wiper blade includes at least one longitudinal groove, comprising the step of disposing a longitudinal strip of the carrier element in said groove, which windscreen wiper device comprises a connecting device for an oscillating arm, wherein said oscillating arm can be pivotally connected to said connecting device about a pivot axis near a free end of said oscillating arm, with the interposition of a joint part, wherein the method further comprises the step of detachably connecting said joint part to said connecting device by engaging protrusions of said connecting device, at the location of said pivot axis, in recesses provided in said joint part, wherein said protrusions of said connecting device are provided with co-axial through holes, wherein
- an upper surface of said joint part comprises a recess arranged to accommodate a L-shaped shoulder provided near said free end of an oscillating arm of a first type, wherein said co-axial through holes are arranged to receive a transverse pivot pin provided near said free end of said oscillating arm of the first type, and wherein a side of said joint part is arranged to abut a leg of said L-shaped shoulder disposed at an end thereof and facing a windscreen to be wiped;
- said joint part comprises at least one resilient tongue arranged to engage into a correspondingly shaped hole provided in a base of a U-shaped cross-section of an oscillating arm of a second type, wherein said resilient tongue is hingeable about a hinge axis between a inward position, wherein said wiper blade can be released from said oscillating arm of the second type, and an outward position, wherein said wiper blade can be retained on said oscillating arm of the second type;
- said joint part is provided with a free end having a recess arranged to accommodate said free end of an oscillating arm of a third type, wherein said joint part comprises at least one protrusion extending laterally from a longitudinal side of said joint part, said protrusion being arranged to hook behind a correspondingly shaped protrusion on said oscillating arm of the third type for blocking a longitudinal movement of said wiper blade with respect to said oscillating arm of the third type, wherein a cover is detachably connected to said joint part, wherein an upper surface of said cover comprises a recess arranged to accommodate
- a rod-shaped oscillating arm of a fifth type;
- a L-shaped shoulder near said free end of an oscillating arm of the first type,
wherein said cover comprises a cap provided with a protrusion in use extending in downward direction towards a windscreen to be wiped, and wherein said downwardly extending protrusion is adapted to engage in a correspondingly shaped hole provided in said oscillating arm of the fifth type for retaining said wiper blade onto said oscillating arm of the fifth type.

The invention will now be explained more in detail with reference to figures illustrated in a drawing, wherein
- figures 1 and 2 are a schematic and perspective view of a connecting device, a joint part and a cover of a windscreen wiper device in a preferred embodiment of the invention in exploded position (figure 1) and in assembled position with and without said cover (figure 2) ;
- figure 3 corresponds to figure 2 and shows a perspective view of several types of oscillating arms to be attached;
- figures 4 and 5 reveal several steps of mounting a unit consisting of the connecting device, the joint part and the cover of figures 1, 2 and 3 to a hook-shaped oscillating arm;
- figure 6 shows a perspective view, a side view and a top view of the connecting device of figures 1, 2 and 3;
- figures 7 and 8 correspond to figure 6, but show an interconnecting of a hook-shaped oscillating arm and the connecting device of figure 6;
- figures 9 and 10 correspond to figure 6, but show an interconnecting of an oscillating arm of another type and the connecting device of figure 6 and the joint part of figures 1, 2 and 3; and
- figures 11 and 12 correspond to figure 6, but show a perspective view of the connecting device and the joint part of figures 1, 2 and 3 in exploded view and in assembled position (figure 12).

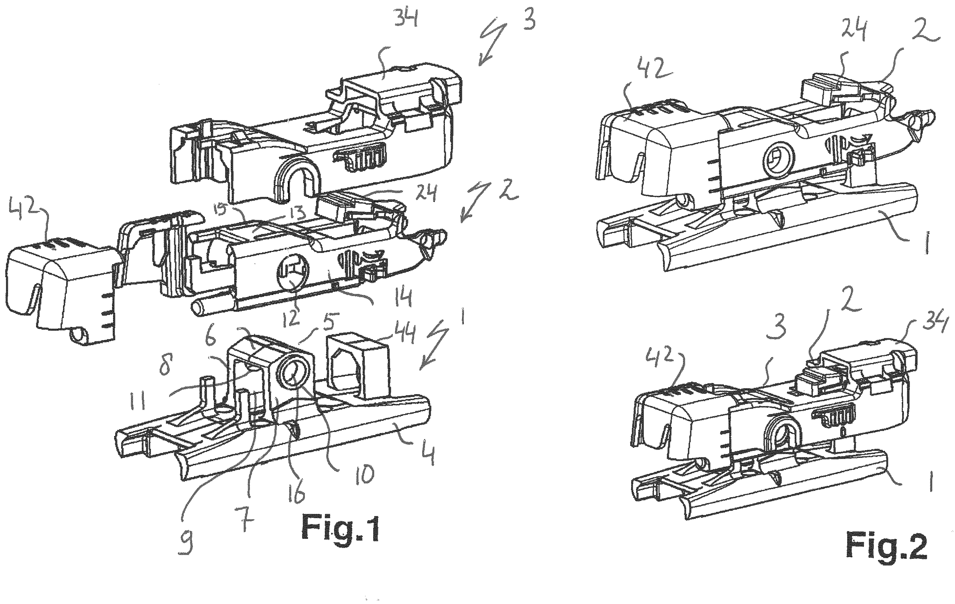

Figure 1 shows a schematic and perspective view of a connecting device 1, a joint part 2 and a cover 3 in a preferred embodiment of the invention in exploded position to be used in a windscreen wiper device of the flat blade type. Such a windscreen wiper device of the flat blade type is typically built up of an elastomeric (rubber) wiper blade comprising a central longitudinal groove, wherein a longitudinal strip made of spring band steel is fitted in said longitudinal groove. Said strip forms a flexible carrier element for the rubber wiper blade, as it were, which is thus biased in a curved position (the curvature in operative position being that of a windscreen to be wiped). Usually an end of said strip and/or an end of said wiper blade is connected on either side of the windscreen wiper device to respective connecting pieces or "end caps". The connecting pieces may be formed as separate constructional elements, which may be form-locked as well as force-locked to both ends of said strip and/or ends of said wiper blade. In the alternative, said connecting pieces may be in one piece with the strip made of spring band steel. The windscreen wiper device is furthermore built up of a connecting device of metal for connecting an oscillating arm thereto, with the interposition of a joint part. The oscillating arm is pivotally connected to the connecting device about a pivot axis near one end.

In the present case said connecting device 1 is particularly welded, soldered, glued or clamped onto two spaced-apart longitudinal strips disposed on opposite sides in longitudinal grooves of the wiper blade. In the alternative or in addition thereto, said connecting device 1 is connected to the elastomeric (rubber) material of the wiper blade, for example glued or clamped.

Although not shown in the figures, but fully understood by a skilled person, the oscillating arm is connected to a mounting head fixed for rotation to a shaft driven by a small motor. In use, the shaft rotates alternately in a clockwise and in a counter-clockwise sense carrying the mounting head into rotation also, which in turn draws said oscillating arm into rotation and by means of said connecting device moves said wiper blade.

In figure 1 the connecting device 1 is made in one piece of plastic and comprises an elongated flat base part 4, as well as a top part 5 having a U-shaped cross-section, wherein a base 6 and legs 7,8 of said U-shaped cross-section define a channel 9 between them arranged to accommodate a hook-shaped oscillating arm, as will be explained hereunder. Said legs 7,8 comprise cylindrical protrusions 10,11 extending laterally outwardly for snappingly and pivotally engaging into identically shaped recesses 12,13 in legs 14,15 of a U-shaped cross-section of said joint part 2. Said protrusions 10,11 of said connecting device 1 and said recesses 12,13 of said joint part 2 are co-axial with said pivot axis. As shown, said protrusions 12,13 are equipped with through holes 16 also co-axial with said pivot axis. Said protrusions 10,11 function as bearing surfaces at the location of the pivot axis in order to pivot the joint part 2 (and the oscillating arm attached thereto) about said pivot axis near one end of said oscillating arm. The protrusions 10,11 are preferably in one piece with said connecting device 1. In the alternative said protrusions 10,11 are part of a separate hollow pin to be inserted into opposite holes in the legs 7,8 of said connecting device 1 (not shown).

Figure 2 is a perspective view of the connecting device 1 and the joint part 2 in assembled position (top of figure 2), whereas at the bottom of figure 2 a perspective view of the connecting device 1, the joint part 2, as well as the cover 3 in assembled position is shown. As depicted, in the latter position the cover 3 almost entirely surrounds the joint part 2.

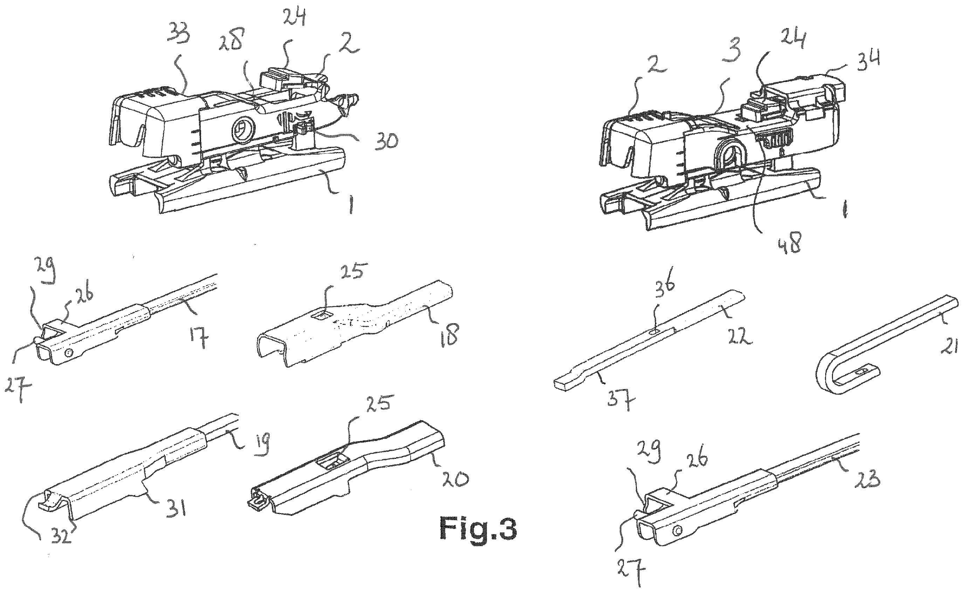

With reference to figure 3 on the left side, a unit consisting of the connecting device 1 and the joint part 2 is arranged to be connected to different types of oscillating arms, namely an oscillating arm 17 of a first type, an oscillating arm 18 of a second type, an oscillating arm 19 of a third type, as well as an oscillating arm 20 of another type being a combination of the second and third type oscillating arms 18,19. Again referring to figure 3 but now on the right side, a unit consisting of the connecting device 1, the joint part 2 and the cover 3 is arranged to be connected to other different types of oscillating arms, namely an oscillating arm 21 of a fourth type, an oscillating arm 22 of a fifth type, as well as an oscillating arm 23 of another type. The oscillating arms 17,23 mutually differ in a distance between legs of an U-shaped cross-section of said oscillating arms 17,23. Said distance in the oscillating arm 17 of the first type is 19 mm, while said distance in the oscillating arm 23 of the other type is 22 mm.

As can be seen in figure 3, the joint part 2 comprises a resilient tongue 24 extending outwardly, while the oscillating arm 18,20 each have a U-shaped cross-section at the location of their connection to said joint part 2, so that the tongue 24 engages in an identically shaped hole 25 provided in a base of said U-shaped cross-section. The connecting device 1 with the wiper blade is mounted onto the oscillating arm 18,23 as follows. The joint part 2 being already clipped onto the connecting device 1 is pivoted relative to the connecting device 1, so that said joint part 2 can be easily slid on a free end of the oscillating arm 18,20. During this sliding movement the resilient tongue 24 is initially pushed in against a spring force and then allowed to spring back into said hole 25, thus snapping, that is clipping the resilient tongue 24 into the hole 25. This is a so-called bayonet-connection. The oscillating arm 18,20 together with the joint part 2 may then be pivoted back in a position parallel to the wiper blade in order to be ready for use. By subsequently pushing in again said resilient tongue 24 against the spring force (as if it were a push button), the connecting device 1 and the joint part 2 together with the wiper blade may be released from the oscillating arm 18,20. Dismounting the connecting device 1 with the wiper blade from the oscillating arm 18,20 is thus realized by sliding the connecting device 1 and the joint part 2 together with the wiper blade in a direction away from the oscillating arm 18,20.

Again with reference to figure 3 on the left, said oscillating arm 17 of the first type is provided with an extension comprising a L-shape shoulder 26 and a transverse pivot pin 27, wherein said shoulder 26 projects out in the direction of said pivot pin 27 and across said wiper blade and at the end of which is disposed a leg 29 facing the windscreen to be wiped. An upper surface of said joint part 2 comprises a recess 28 arranged to accommodate said L-shaped shoulder 26, wherein said co-axial through holes 10 are arranged to receive said transverse pivot pin 27. In assembled position a side of said joint part 2 facing away from the oscillating arm 17 of the first type cooperates with a stop being formed by an inner wall of a leg 29 of said L-shaped shoulder 26, while securing of the wiper blade on the pivot pin 27 toward the other side is taken over by the oscillating arm 17 of the first type itself.

For connecting said oscillating arm 19 of the third type to said joint part 2 said oscillating arm 19 is pivoted relative to said joint part 2 in an inclined position with respect to said wiper blade, so that resilient protrusions 30 extending laterally outwardly on either side of said joint part 2 are hooking behind correspondingly shaped protrusions 31 on legs 32 of a U-shaped cross-section of said oscillating arm 19. Said oscillating arm 19 is pivoted back relative to said joint part 2 in a parallel position with respect to said wiper blade, so that a free end of said oscillating arm 2 is snapped in a recess 33 at the free end of said joint part 2. Connecting said arm 20 of another type is carried out accordingly, with the difference that in addition said resilient tongue 24 of the joint part 2 is clipped inside the hole 25 of said oscillating arm 20.

As can be seen in figure 3 on the right, the cover 3 is snapped or clipped onto the protrusions 10,11 of the connecting device 1 on top of the joint part 2. Said cover 3 comprises on its upper surface a recess 48 arranged to accommodate an L-shaped shoulder 26 of the oscillating arm 23, wherein said co-axial through holes 10 are arranged to receive an transverse pivot pin 27 of the oscillating arm 23. In assembled position a side of said cover 3 facing away from the oscillating arm 23 cooperates with a stop being formed by an inner wall of a leg 29 of said L-shaped shoulder 26, while securing of the wiper blade on the pivot pin 27 toward the other side is taken over by the oscillating arm 23 itself.

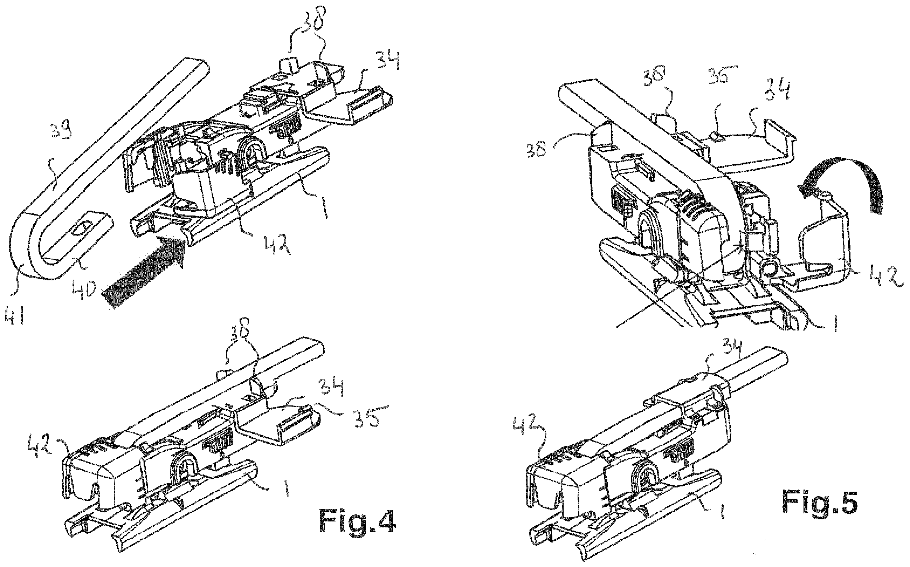

As depicted in figure 3 on the right, said cover 3 comprises a cap 34 on an upper surface thereof provided with an in use downwardly extending protrusion 35, wherein said downwardly extending protrusion 35 is adapted to engage in a correspondingly shaped hole 36 provided in said oscillating arm 22 of the fifth type for retaining said wiper blade onto said oscillating arm 22. Said cap 34 has a U-shaped cross-section, wherein said protrusion 35 extends from a base of said U-shaped cross-section of said cap 34 in downward direction in use. Said cap 34 near an edge of said upper surface is hingeably connected to said cover 3 between a closed position (seen in figures 3 and 5), wherein said wiper blade can be retained onto said oscillating arm 22, and an open position (seen in figures 4 and 5), wherein said wiper blade can be released from said oscillating arm 22. Said recess 33 in a base of a U-shaped cross-section of said cover is arranged for receiving a free end 37 of said oscillating arm 7 (figure 3). As shown in figure 4, said cover 3 further comprises two spaced-apart guiding protrusions 38 extending upwardly from an upper surface of said cover 3, wherein said guiding protrusions 38 are adapted to receive said free end 37 of said oscillating arm 22 between them.

Figures 4 and 5 reveal several steps of mounting a unit consisting of the connecting device 1, the joint part 2 and the cover 3 to said oscillating arm 21 of the fourth type comprising two longitudinal arm sections 39,40 connected to each other by means of a curved intermediate section 41. As shown, a free end 42 of said joint part 2 is hingeable about a longitudinal axis of the windscreen wiper device between an open position, wherein said wiper blade can be released from said oscillating arm 21 of the fourth type, and a closed position, wherein said wiper blade can be retained on said oscillating arm 21. In said open position said longitudinal arm section 40 in use facing towards a windscreen to be wiped is introduced in said longitudinal channel 9 of said connecting device 1 and between a base and legs 14,15 of a U-shaped cross-section of said joint part 2.

The free end 42 is subsequently closed, wherein finally also the cap 34 is closed, while the longitudinal arm section 39 in use facing away from a windscreen to be wiped is kept between the guiding protrusions 38.

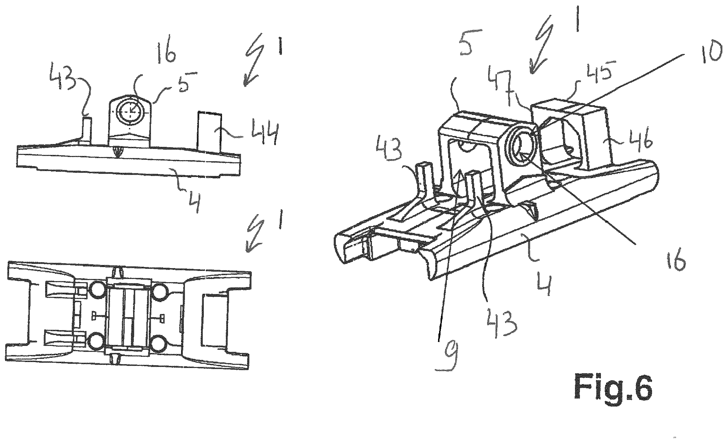

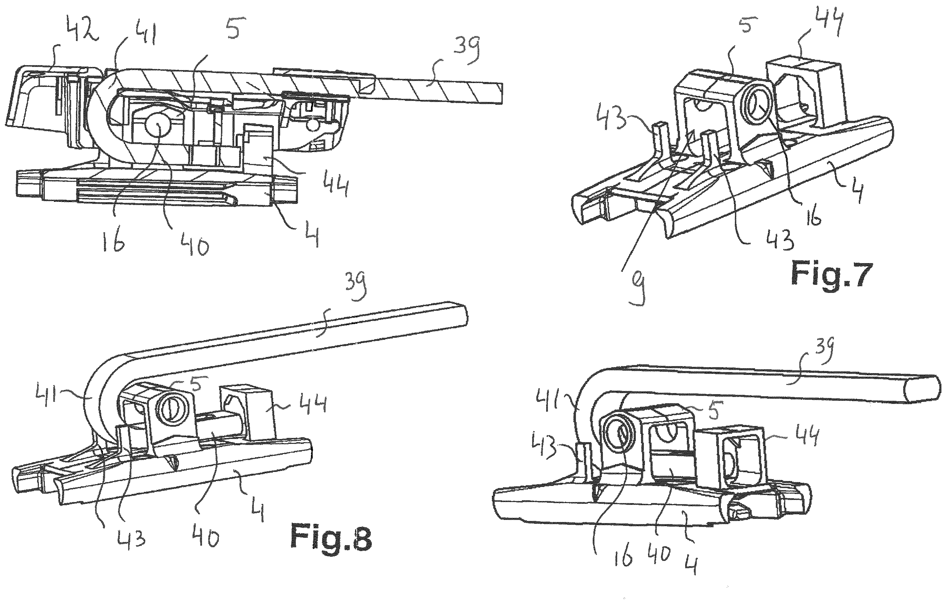

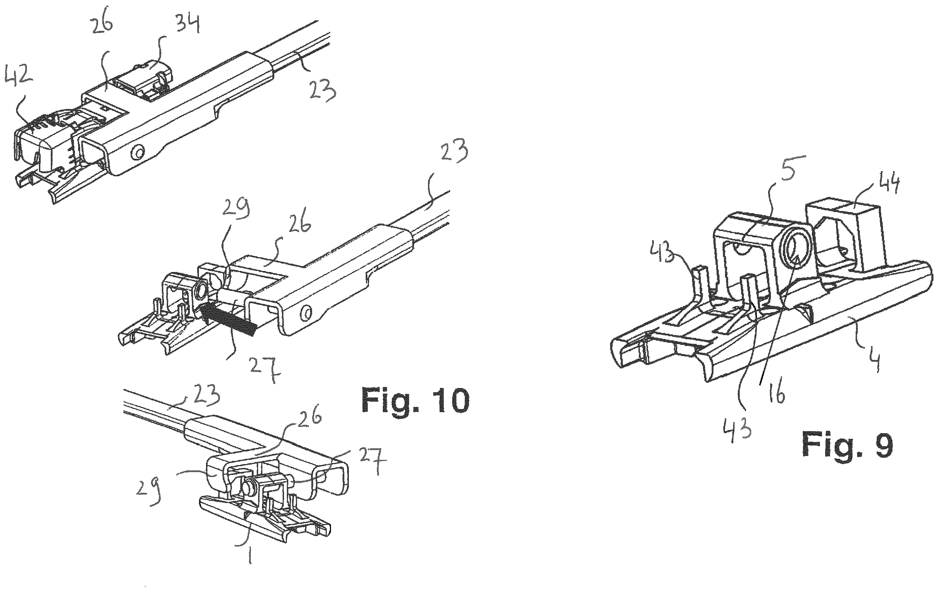

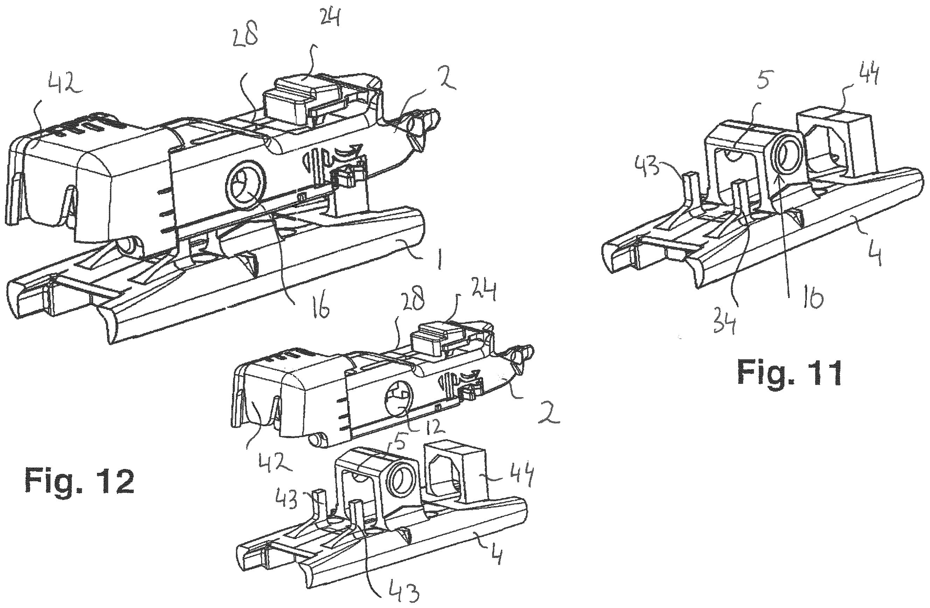

In figures 6 through 12 corresponding parts have been designated with the same reference numerals. The connecting device 1 comprises two spaced-apart guiding protuberances 38 extending upwardly from an upper surface of flat base part 4 in order to guide said longitudinal arm section 40 of said oscillating arm 21 of the fourth type. In the embodiment of figure 6 the connecting device 1 further comprises a second top part 44 also in one piece therewith and having a U-shaped cross-section, wherein a base 45 and legs 46,47 of said U-shaped cross-section further define said channel 9 between them arranged to accommodate said longitudinal arm section 40 of said oscillating arm 21 of the fourth type. The invention is not restricted to the variants shown in the drawing, but it also extends to other embodiments that fall within the scope of the appended claims.

## Claims

1. A windscreen wiper device of the flat blade type comprising an elastic, elongated carrier element, as well as an elongated wiper blade of a flexible material, which can be placed in abutment with a windscreen to be wiped, which wiper blade includes at least one longitudinal groove, in which groove a longitudinal strip of the carrier element is disposed, which windscreen wiper device comprises a connecting device (1) for an oscillating arm, wherein said oscillating arm can be pivotally connected to said connecting device (1) about a pivot axis near a free end of said oscillating arm, with the interposition of a joint part(2), wherein said joint part (2) is detachably connected to said connecting device (1) by engaging protrusions (10,11) of said connecting device (1), at the location of said pivot axis, in recesses (12,13) provided in said joint part (2), wherein said protrusions (10,11) of said connecting device (1) are provided with co-axial through holes (16), wherein
- an upper surface of said joint part (2) comprises a recess (28) arranged to accommodate a L-shaped shoulder (26) provided near said free end of an oscillating arm (17) of a first type, wherein said co-axial through holes (16) are arranged to receive a transverse pivot pin (27) provided near said free end of said oscillating arm (17) of the first type, and wherein a side of said joint part (2) is arranged to abut a leg (29) of said L-shaped shoulder (26) disposed at an end thereof and facing a windscreen to be wiped;
- said joint part (2) comprises at least one resilient tongue (24) arranged to engage into a correspondingly shaped hole (25) provided in a base of a U-shaped cross-section of an oscillating arm (18) of a second type, wherein said resilient tongue (24) is hingeable about a hinge axis between a inward position, wherein said wiper blade can be released from said oscillating arm (18) of the second type, and an outward position, wherein said wiper blade can be retained on said oscillating arm (18) of the second type;
- said joint part (2) is provided with a free end (42) having a recess (33) arranged to accommodate said free end of an oscillating arm (19) of a third type, wherein said joint part (2) comprises at least one protrusion (30) extending laterally from a longitudinal side of said joint part (2), said protrusion (30) being arranged to hook behind a correspondingly shaped protrusion (31) on said oscillating arm (19) of the third type for blocking a longitudinal movement of said wiper blade with respect to said oscillating arm (19) of the third type, wherein a cover (3) is detachably connected to said joint part (2), **characterized in that** an upper surface of said cover (3) comprises a recess (48) arranged to accommodate
- a rod-shaped oscillating arm (22) of a fifth type;
- a L-shaped shoulder (26) near said free end of an oscillating arm (17) of the first type,
wherein said cover comprises a cap (34) provided with a protrusion (35) in use extending in downward direction towards a windscreen to be wiped, and wherein said downwardly extending protrusion (35) is adapted to engage in a correspondingly shaped hole (36) provided in said oscillating arm (22) of the fifth type for retaining said wiper blade onto said oscillating arm (22) of the fifth type.

2. A windscreen wiper device according to claim 1, wherein said joint part (2) has an at least substantially U-shaped cross-section at the location of its connection to said connection device (1), wherein said joint part (2) in each leg (14,15) of said U-shaped cross-section is provided with said recess (12,13) provided co-axially with said pivot axis, and wherein said co-axial recesses (12,13) of said legs (14,15) of said U-shaped cross-section and said co-axial through holes (16) of said protrusions (10,11) of said connecting device (1) are arranged to receive said pivot pin (27) of said oscillating arm (17) of the first type.

3. A windscreen wiper device according to claim 1 or 2, wherein said joint part (2) has an at least substantially U-shaped cross-section at the location of its connection to said connection device (1), and wherein a base of said U-shaped cross-section of said joint part (2) comprises said resilient tongue (24) extending outwardly.

4. A windscreen wiper device according to claim 1, 2 or 3, wherein said hinge axis is located near an inner edge of said joint part (2).

5. A windscreen wiper device according to claim 1, 2 or 3, wherein said hinge axis is located near an outer edge of said joint part (2).

6. A windscreen wiper device according to any of the preceding claims 1 through 5, wherein said joint part (2) has an at least substantially U-shaped cross-section at the location of its connection to said connection device (1), and wherein a base of said U-shaped cross-section of said joint part (2) comprises said recess (33) arranged to accommodate said free end of said oscillating arm (19) of the third type.

7. A windscreen wiper device according to claim 6, wherein said free end (42) of said joint part (2) is resilient and can pivot about a hinge axis between a first position for mounting or dismounting said free end of the oscillating arm (19) of the third type into or from said recess (33) in the base of the U-shaped cross-section of said joint part (2), and a second position for connecting said free end of the oscillating arm (19) of the third type to said joint part (2).

8. A windscreen wiper device according to any of the preceding claims 1 through 7, wherein said connecting device (1) comprises a longitudinal channel (9) arranged to receive an oscillating arm (21) of a fourth type comprising two longitudinal arm sections (39,40) connected to each other by means of a curved intermediate section (41).

9. A windscreen wiper device according to claim 8, wherein said joint part (2) has an at least substantially U-shaped cross-section at the location of its connection to said connection device (1), and wherein said longitudinal channel (9), a base and legs (14,15) of the U-shaped cross-section of said joint part (2) are arranged to receive a longitudinal arm section (40) of said oscillating arm (21) of the fourth type that in use is facing towards a windscreen to be wiped.

10. A windscreen wiper device according to claim 8 or 9, wherein said free end (42) of said joint part (2) is movable between an open position, wherein said wiper blade can be released from said oscillating arm (21) of the fourth type, and an closed position, wherein said wiper blade can be retained on said oscillating arm (21) of the fourth type.

11. A windscreen wiper device according to claim 10, wherein said free end (42) of said joint part (2) is hingeable between said open and closed positions about a longitudinal axis of the windscreen wiper device.

12. A windscreen wiper device according to any one of the preceding claims 1 through 11, wherein said cover (3) is detachably connected to said joint part (2) by engaging protrusions (10,11) of said connecting device (1), at the location of said pivot axis, in recesses provided in said cover (3).

13. A windscreen wiper device according to any of the preceding claims 1 through 12, wherein said cap (34) is hingeably connected to said cover (3) between a closed position, wherein said wiper blade is retained onto said oscillating arm (22) of the fifth type, and an open position, wherein said wiper blade can be released from said oscillating arm (22) of the fifth type.

14. A windscreen wiper device according to any of the preceding claims 1 through 13, wherein said cover (3) has an at least substantially U-shaped cross-section at the location of its connection to said joint part (2), and wherein said recess (48) is provided in a base of the U-shaped cross-section.

15. A windscreen wiper device according to any of the preceding claims 1 through 14, wherein said cover (3) comprises two spaced-apart guiding protrusions (38) extending upwardly from an upper surface of said cover (3), and wherein said guiding protrusions (38) are adapted to receive said oscillating arm (22) of the fifth type between them.

16. A windscreen wiper device according to any of the preceding claims 1 through 15, wherein said cover (3) is detachably connected to said joint part (2) through a snapping/clipping operation.

17. A method for manufacturing a windscreen wiper device of the flat blade type comprising an elastic, elongated carrier element, as well as an elongated wiper blade of a flexible material, which can be placed in abutment with a windscreen to be wiped, which wiper blade includes at least one longitudinal groove, comprising the step of disposing a longitudinal strip of the carrier element in said groove which windscreen wiper device comprises a connecting device (1) for an oscillating arm, wherein said oscillating arm can be pivotally connected to said connecting device (1) about a pivot axis near a free end of said oscillating arm, with the interposition of a joint part (2), wherein the method further comprises the step of detachably connecting said joint part (2) to said connecting device (1) by engaging protrusions (10,11) of said connecting device (1), at the location of said pivot axis, in recesses (12,13) provided in said joint part (2), wherein said protrusions (10,11) of said connecting device (1) are provided with co-axial through holes (16), wherein
- an upper surface of said joint part (2) comprises a recess (28) arranged to accommodate a L-shaped shoulder (26) provided near said free end of an oscillating arm (17) of a first type, wherein said co-axial through holes (16) are arranged to receive a transverse pivot pin (27) provided near said free end of said oscillating arm (17) of the first type, and wherein a side of said joint part (2) is arranged to abut a leg (29) of said L-shaped shoulder (26) disposed at an end thereof and facing a windscreen to be wiped;
- said joint part (2) comprises at least one resilient tongue (24) arranged to engage into a correspondingly shaped hole (25) provided in a base of a U-shaped cross-section of an oscillating arm (18) of a second type, wherein said resilient tongue (24) is hingeable about a hinge axis between a inward position, wherein said wiper blade can be released from said oscillating arm (18) of the second type, and an outward position, wherein said wiper blade can be retained on said oscillating arm (18) of the second type;
- said joint part (2) is provided with a free end (42) having a recess (33) arranged to accommodate said free end of an oscillating arm (19) of a third type, wherein said joint part (2) comprises at least one protrusion (30) extending laterally from a longitudinal side of said joint part (2), said protrusion (30) being arranged to hook behind a correspondingly shaped protrusion (31) on said oscillating arm (19) of the third type for blocking a longitudinal movement of said wiper blade with respect to said oscillating arm (19) of the third type, wherein a cover (3) is detachably connected to said joint part (2), wherein an upper surface of said cover (3) comprises a recess (48) arranged to accommodate
- a rod-shaped oscillating arm (22) of a fifth type;
- a L-shaped shoulder (26) near said free end of an oscillating arm (17) of the first type,
wherein said cover comprises a cap (34) provided with a protrusion (35) in use extending in downward direction towards a windscreen to be wiped, and wherein said downwardly extending protrusion (35) is adapted to engage in a correspondingly shaped hole (36) provided in said oscillating arm (22) of the fifth type for retaining said wiper blade onto said oscillating arm (22) of the fifth type.

## Patentansprüche

1. Scheibenwischervorrichtung des Flachblatttyps, umfassend ein elastisches, längliches Trägerelement, sowie ein längliches Wischerblatt aus einem flexiblen Material, das anliegend an eine zu wischenden Windschutzscheibe platziert werden kann, wobei das Wischerblatt mindestens eine Längsnut beinhaltet, wobei in der Nut ein Längsstreifen des Trägerelements angeordnet ist, wobei die Scheibenwischervorrichtung eine Verbindungsvorrichtung (1) für einen sich hin und her bewegenden Arm umfasst, wobei der sich hin und her bewegende Arm schwenkbar verbunden werden kann mit der Verbindungsvorrichtung (1) um eine Schwenkachse in der Nähe eines freien Endes des sich hin und her bewegenden Arms, mit der Zwischenschaltung eines Gelenkteils (2), wobei das Gelenkteil (2) mit der Verbindungsvorrichtung (1) lösbar verbunden ist durch Eingreifen von Vorsprüngen (10, 11) der Verbindungsvorrichtung (1), an der Stelle der Schwenkachse, in Aussparungen (12, 13), die in dem Gelenkteil (2) bereitgestellt sind, wobei die Aussparungen (10, 11) der Verbindungsvorrichtung (1) mit koaxialen Durchgangslöchern (16) versehen sind, wobei
- eine obere Fläche des Gelenkteils (2) eine Aussparung (28) umfasst, die eingerichtet ist, um eine L-förmige Schulter (26) unterzubringen, die in der Nähe des freien Endes eines sich hin und her bewegenden Arms (17) eines ersten Typs bereitgestellt ist, wobei die koaxialen Durchgangslöcher (16) eingerichtet sind, um einen querverlaufenden Schwenkstift (27) aufzunehmen, der in der Nähe des freien Endes des sich hin und her bewegenden Arms (17) des ersten Typs bereitgestellt ist, und wobei eine Seite des Gelenkteils (2) eingerichtet ist, an einem Schenkel (29) der L-förmigen Schulter (26) anzuliegen, angeordnet an einem Ende davon und einer zu wischenden Windschutzscheibe zugewandt;
- das Gelenkteil (2) mindestens eine rückfedernde Zunge (24) aufweist, die eingerichtet ist, in ein entsprechend geformtes Loch (25) einzugreifen, das in einer Basis eines U-förmigen Querschnitts eines sich hin und her bewegenden Arms (18) eines zweiten Typs bereitgestellt ist, wobei die rückfedernde Zunge (24) um eine Gelenkachse schwenkbar ist zwischen einer inneren Position, wobei das Wischerblatt von dem sich hin und her bewegenden Arm (18) des zweiten Typs freigegeben werden kann, und einer äußeren Position, wobei das Wischerblatt an dem sich hin und her bewegenden Arm (18) des zweiten Typs gehalten werden kann;
- das Gelenkteil (2) mit einem freien Ende (42) versehen ist, das eine Aussparung (33) aufweist, die eingerichtet ist, um das freie Ende eines sich hin und her bewegenden Arms (19) eines dritten Typs unterzubringen, wobei das Gelenkteil (2) mindestens einen Vorsprung (30) aufweist, der sich seitlich von einer Längsseite des Gelenkteils (2) erstreckt, wobei der Vorsprung (30) eingerichtet ist, hinter einen entsprechend geformten Vorsprung (31) an dem sich hin und her bewegenden Arm (19) des dritten Typs einzuhaken, um eine Längsbewegung des Wischerblatts zu blockieren in Bezug auf den sich hin und her bewegenden Arm (19) des dritten Typs, wobei eine Abdeckung (3) mit dem Gelenkteil (2) lösbar verbunden ist, **dadurch gekennzeichnet, dass** eine obere Fläche der Abdeckung (3) eine Aussparung (48) umfasst, die eingerichtet ist, um unterzubringen
- einen stabförmigen sich hin und her bewegenden Arm (22) eines fünften Typs;
- eine L-förmige Schulter (26) in der Nähe des freien Endes eines sich hin und her bewegenden Arms (17) des ersten Typs, wobei die Abdeckung eine Kappe (34) umfasst, die mit einem Vorsprung (35) versehen ist, der sich bei Gebrauch in Abwärtsrichtung in Richtung einer zu wischenden Windschutzscheibe erstreckt, und wobei der sich abwärts erstreckende Vorsprung (35) angepasst ist, in ein entsprechend geformtes Loch (36) einzugreifen, das in dem sich hin und her bewegenden Arm (22) des fünften Typs bereitgestellt ist zum Halten des Wischerblatts auf dem sich hin und her bewegenden Arm (22) des fünften Typs.

2. Scheibenwischervorrichtung gemäß Anspruch 1, wobei das Gelenkteil (2) einen zumindest im Wesentlichen U-förmigen Querschnitt aufweist an der Stelle seiner Verbindung mit der Verbindungsvorrichtung (1), wobei das Gelenkteil (2) in jedem Schenkel (14, 15) des U-förmigen Querschnitts mit der Aussparung (12, 13) versehen ist, die koaxial mit der Schwenkachse bereitgestellt ist, und wobei die koaxialen Aussparungen (12, 13) der Schenkel (14, 15) des U-förmigen Querschnitts und die koaxialen Durchgangslöcher (16) der Vorsprünge (10, 11) der Verbindungsvorrichtung (1) eingerichtet sind, um den Schwenkstift (27) des sich hin und her bewegenden Arms (17) des ersten Typs aufzunehmen.

3. Scheibenwischervorrichtung gemäß Anspruch 1 oder 2, wobei das Gelenkteil (2) einen zumindest im Wesentlichen U-förmigen Querschnitt aufweist an der Stelle seiner Verbindung mit der Verbindungsvorrichtung (1), und wobei eine Basis des U-förmigen Querschnitts des Gelenkteils (2) die rückfedernde Zunge (24) umfasst, die sich nach außen erstreckt.

4. Scheibenwischervorrichtung gemäß Anspruch 1, 2 oder 3, wobei sich die Gelenkachse nahe einer Innenkante des Gelenkteils (2) befindet.

5. Scheibenwischervorrichtung gemäß Anspruch 1, 2 oder 3, wobei sich die Gelenkachse nahe einer Außenkante des Gelenkteils (2) befindet.

6. Scheibenwischervorrichtung gemäß einem der vorhergehenden Ansprüche 1 bis 5, wobei das Gelenkteil (2) einen zumindest im Wesentlichen U-förmigen Querschnitt aufweist an der Stelle seiner Verbindung mit der Verbindungsvorrichtung (1), und wobei eine Basis des U-förmigen Querschnitts des Gelenkteils (2) die Aussparung (33) umfasst, die eingerichtet ist, das freie Ende des sich hin und her bewegenden Arms (19) des dritten Typs unterzubringen.

7. Scheibenwischervorrichtung gemäß Anspruch 6, wobei das freie Ende (42) des Gelenkteils (2) rückfedernd ist und um eine Gelenkachse schwenken kann zwischen einer ersten Position zum Befestigen oder Loslösen des freien Endes des sich hin und her bewegenden Arms (19) des dritten Typs in die oder aus der Aussparung (33) in der Basis des U-förmigen Querschnitts des Gelenkteils (2), und einer zweiten Position zum Verbinden des freien Endes des sich hin und her bewegenden Arms (19) des dritten Typs mit dem Gelenkteil (2).

8. Scheibenwischervorrichtung gemäß einem der vorhergehenden Ansprüche 1 bis 7, wobei die Verbindungsvorrichtung (1) einen Längskanal (9) umfasst, der eingerichtet ist, um einen sich hin und her bewegenden Arm (21) eines vierten Typs aufzunehmen, der zwei Längsarmabschnitte (39, 40) aufweist, die mittels eines gebogenen Zwischenabschnitts (41) miteinander verbunden sind.

9. Scheibenwischervorrichtung gemäß Anspruch 8, wobei das Gelenkteil (2) einen zumindest im Wesentlichen U-förmigen Querschnitt aufweist an der Stelle seiner Verbindung mit der Verbindungsvorrichtung (1), und wobei der Längskanal (9), eine Basis und Schenkel (14, 15) des U-förmigen Querschnitts des Gelenkteils (2) eingerichtet sind, um einen Längsarmabschnitt (40) des sich hin und her bewegenden Arms (21) des vierten Typs aufzunehmen, der bei Gebrauch zugewandt zu einer zu wischenden Windschutzscheibe ist.

10. Scheibenwischervorrichtung gemäß Anspruch 8 oder 9, wobei das freie Ende (42) des Gelenkteils (2) beweglich ist zwischen einer offenen Position, wobei das Wischerblatt von dem sich hin und her bewegenden Arm (21) des vierten Typs freigegeben werden kann, und einer geschlossenen Position, wobei das Wischerblatt an dem sich hin und her bewegenden Arm (21) des vierten Typs gehalten werden kann.

11. Scheibenwischervorrichtung gemäß Anspruch 10, wobei das freie Ende (42) des Gelenkteils (2) schwenkbar ist zwischen der offenen und der geschlossenen Position um eine Längsachse der Scheibenwischervorrichtung.

12. Scheibenwischervorrichtung gemäß einem der vorhergehenden Ansprüche 1 bis 11, wobei die Abdeckung (3) lösbar mit dem Gelenkteil (2) verbunden ist durch Eingreifen von Vorsprüngen (10, 11) der Verbindungsvorrichtung (1), an der Stelle der Schwenkachse, in Aussparungen, die in der Abdeckung (3) bereitgestellt sind.

13. Scheibenwischervorrichtung gemäß einem der vorhergehenden Ansprüche 1 bis 12, wobei die Kappe (34) schwenkbar mit der Abdeckung (3) verbunden ist zwischen einer geschlossenen Position, wobei das Wischerblatt auf dem sich hin und her bewegenden Arm (22) des fünften Typs gehalten wird, und einer offenen Position, wobei das Wischerblatt von dem sich hin und her bewegenden Arm (22) des fünften Typs freigegeben werden kann.

14. Scheibenwischervorrichtung gemäß einem der vorhergehenden Ansprüche 1 bis 13, wobei die Abdeckung (3) einen zumindest im Wesentlichen U-förmigen Querschnitt aufweist an der Stelle ihrer Verbindung mit dem Gelenkteil (2), und wobei die Aussparung (48) in einer Basis des U-förmigen Querschnitts bereitgestellt ist.

15. Scheibenwischervorrichtung gemäß einem der vorhergehenden Ansprüche 1 bis 14, wobei die Abdeckung (3) zwei beabstandete Führungsvorsprünge (38) aufweist, die sich aufwärts erstrecken von einer oberen Fläche der Abdeckung (3), und wobei die Führungsvorsprünge (38) angepasst sind, den sich hin und her bewegenden Arm (22) des fünften Typs zwischen ihnen aufzunehmen.

16. Scheibenwischervorrichtung gemäß einem der vorhergehenden Ansprüche 1 bis 15, wobei die Abdeckung (3) lösbar verbunden ist mit dem Gelenkteil (2) durch einen Einrast-/Einhängvorgang.

17. Verfahren zum Herstellen einer Scheibenwischervorrichtung des Flachblatttyps, umfassend ein elastisches, längliches Trägerelement, sowie ein längliches Wischerblatt aus einem flexiblen Material, das anliegend an eine zu wischenden Windschutzscheibe platziert werden kann, wobei das Wischerblatt mindestens eine Längsnut beinhaltet, umfassend den Schritt von Anordnen eines Längsstreifens des Trägerelements in der Nut, wobei die Scheibenwischervorrichtung eine Verbindungsvorrichtung (1) für einen sich hin und her bewegenden Arm umfasst, wobei der sich hin und her bewegende Arm schwenkbar verbunden werden kann mit der Verbindungsvorrichtung (1) um eine Schwenkachse in der Nähe eines freien Endes des sich hin und her bewegenden Arms, mit der Zwischenschaltung eines Gelenkteils (2), wobei das Verfahren ferner umfasst den Schritt von lösbarem Verbinden des Gelenkteils (2) mit der Verbindungsvorrichtung (1) durch in Eingriff bringen von Vorsprüngen (10, 11) der Verbindungsvorrichtung (1), an der Stelle der Schwenkachse, in Aussparungen (12, 13), die in dem Gelenkteil (2) bereitgestellt sind, wobei die Aussparungen (10, 11) der Verbindungsvorrichtung (1) mit koaxialen Durchgangslöchern (16) versehen sind, wobei
- eine obere Fläche des Gelenkteils (2) eine Aussparung (28) umfasst, die eingerichtet ist, um eine L-förmige Schulter (26) unterzubringen, die in der Nähe des freien Endes eines sich hin und her bewegenden Arms (17) eines ersten Typs bereitgestellt ist, wobei die koaxialen Durchgangslöcher (16) eingerichtet sind, um einen querverlaufenden Schwenkstift (27) aufzunehmen, der in der Nähe des freien Endes des sich hin und her bewegenden Arms (17) des ersten Typs bereitgestellt ist, und wobei eine Seite des Gelenkteils (2) eingerichtet ist, an einem Schenkel (29) der L-förmigen Schulter (26) anzuliegen, angeordnet an einem Ende davon und einer zu wischenden Windschutzscheibe zugewandt;
- das Gelenkteil (2) mindestens eine rückfedernde Zunge (24) aufweist, die eingerichtet ist, in ein entsprechend geformtes Loch (25) einzugreifen, das in einer Basis eines U-förmigen Querschnitts eines sich hin und her bewegenden Arms (18) eines zweiten Typs bereitgestellt ist, wobei die rückfedernde Zunge (24) um eine Gelenkachse schwenkbar ist zwischen einer inneren Position, wobei das Wischerblatt von dem sich hin und her bewegenden Arm (18) des zweiten Typs freigegeben werden kann, und einer äußeren Position, wobei das Wischerblatt an dem sich hin und her bewegenden Arm (18) des zweiten Typs gehalten werden kann;
- das Gelenkteil (2) mit einem freien Ende (42) versehen ist, das eine Aussparung (33) aufweist, die eingerichtet ist, um das freie Ende eines sich hin und her bewegenden Arms (19) eines dritten Typs unterzubringen, wobei das Gelenkteil (2) mindestens einen Vorsprung (30) aufweist, der sich seitlich von einer Längsseite des Gelenkteils (2) erstreckt, wobei der Vorsprung (30) eingerichtet ist, hinter einen entsprechend geformten Vorsprung (31) an dem sich hin und her bewegenden Arm (19) des dritten Typs einzuhaken, um eine Längsbewegung des Wischerblatts zu blockieren in Bezug auf den sich hin und her bewegenden Arm (19) des dritten Typs, wobei eine Abdeckung (3) mit dem Gelenkteil (2) lösbar verbunden wird, wobei eine obere Fläche der Abdeckung (3) eine Aussparung (48) umfasst, die eingerichtet ist, um unterzubringen
- einen stabförmigen sich hin und her bewegenden Arm (22) eines fünften Typs;
- eine L-förmige Schulter (26) in der Nähe des freien Endes eines sich hin und her bewegenden Arms (17) des ersten Typs, wobei die Abdeckung eine Kappe (34) umfasst, die mit einem Vorsprung (35) versehen ist, der sich bei Gebrauch in Abwärtsrichtung in Richtung einer zu wischenden Windschutzscheibe erstreckt, und wobei der sich abwärts erstreckende Vorsprung (35) angepasst ist, in ein entsprechend geformtes Loch (36) einzugreifen, das in dem sich hin und her bewegenden Arm (22) des fünften Typs bereitgestellt ist zum Halten des Wischerblatts auf dem sich hin und her bewegenden Arm (22) des fünften Typs.

## Revendications

1. Dispositif d'essuie-glace du type à balai plat, comprenant un élément de support élastique allongé, ainsi qu'un balai d'essuie-glace allongé réalisé avec un matériau flexible, qui peut être placé en butée contre un pare-brise à essuyer, lequel balai d'essuie-glace comprend au moins une rainure longitudinale, dans laquelle rainure, est disposée une bande longitudinale de l'élément de support, lequel dispositif d'essuie-glace comprend un dispositif de raccordement (1) pour un bras oscillant, dans lequel ledit bras oscillant peut être raccordé, de manière pivotante, audit dispositif de raccordement (1) autour d'un axe de pivot à proximité d'une extrémité libre dudit bras oscillant, avec l'interposition d'une partie de joint (2), dans lequel ladite partie de joint (2) est raccordée, de manière détachable, audit dispositif de raccordement (1) par des saillies de mise en prise (10, 11) dudit dispositif de raccordement (1), à l'emplacement dudit axe de pivot, dans des évidements (12, 13) prévus dans ladite partie de joint (2), dans lequel lesdites saillies (10, 11) dudit dispositif de raccordement (1) sont prévues avec des trous débouchants coaxiaux (16), dans lequel :
- une surface supérieure de ladite partie de joint (2) comprend un évidement (28) agencé pour loger un épaulement en forme de L (26) prévu à proximité de ladite extrémité libre d'un bras oscillant (17) d'un premier type, dans lequel lesdits trous débouchants coaxiaux (16) sont agencés pour recevoir une broche de pivot transversale (27) prévue à proximité de ladite extrémité libre dudit bras oscillant (17) du premier type, et dans lequel un côté de ladite partie de joint (2) est agencé pour venir en butée contre une patte (29) dudit épaulement en forme de L (26) disposé au niveau de son extrémité et faisant face à un pare-brise à essuyer ;
- ladite partie de joint (2) comprend au moins une languette résiliente (24) agencée pour se mettre en prise dans un trou (25) formé de manière correspondante prévu dans une base d'une section transversale en forme de U d'un bras oscillant (18) d'un deuxième type, dans lequel ladite languette résiliente (24) peut être articulée autour d'un axe de charnière entre une position vers l'intérieur, dans lequel ledit balai d'essuie-glace peut être libéré dudit bras oscillant (18) du deuxième type, et une position vers l'extérieur dans laquelle ledit balai d'essuie-glace peut être retenu sur ledit bras oscillant (18) du deuxième type ;
- ladite partie de joint (2) est prévue avec une extrémité libre (42) ayant un évidement (33) agencé pour loger ladite extrémité libre d'un bras oscillant (19) d'un troisième type, dans lequel ladite partie de joint (2) comprend au moins une saillie (30) s'étendant latéralement à partir d'un côté longitudinal de ladite partie de joint (2), ladite saillie (30) étant agencée pour s'accrocher derrière une saillie (31) de forme correspondante sur ledit bras oscillant (19) du troisième type pour empêcher un mouvement longitudinal dudit balai d'essuie-glace par rapport audit bras oscillant (19) du troisième type, dans lequel un couvercle (3) est raccordé de manière détachable à ladite partie de joint (2), **caractérisé en ce qu'**une surface supérieure dudit couvercle (3) comprend un évidement (48) agencé pour loger :
- un bras oscillant en forme de tige (22) d'un cinquième type ;
- un épaulement en forme de L (26) à proximité de ladite extrémité libre d'un bras oscillant (17) du premier type,
- dans lequel ledit couvercle comprend un capuchon (34) prévu avec une saillie (35) s'étendant, à l'usage, dans une direction descendante vers un pare-brise à essuyer, et dans lequel ladite saillie s'étendant vers le bas (35) est adaptée pour se mettre en prise dans un trou (36) formé de manière correspondante, prévu dans ledit bras oscillant (22) du cinquième type pour retenir ledit balai d'essuie-glace sur ledit bras oscillant (22) du cinquième type.

2. Dispositif d'essuie-glace selon la revendication 1, dans lequel ladite partie de joint (2) a au moins une section transversale formée sensiblement en forme de U à l'emplacement de son raccordement avec ledit dispositif de raccordement (1), dans lequel ladite partie de joint (2) dans chaque patte (14, 15) de ladite section transversale en forme de U est prévue avec ledit évidement (12, 13) prévu de manière coaxiale avec ledit axe de pivot, et dans lequel lesdits évidement coaxiaux (12, 13) desdites pattes (14, 15) de ladite section transversale en forme de U et lesdits trous débouchants coaxiaux (16) desdites saillies (10, 11) dudit dispositif de raccordement (1) sont agencés pour recevoir ladite broche de pivot (27) dudit bras oscillant (17) du premier type.

3. Dispositif d'essuie-glace selon la revendication 1 ou 2, dans lequel ladite partie de joint (2) a au moins une section transversale sensiblement en forme de U à l'emplacement de son raccordement avec ledit dispositif de raccordement (1), et dans lequel une base de ladite section transversale en forme de U de ladite partie de joint (2) comprend ladite languette résiliente (24) s'étendant vers l'extérieur.

4. Dispositif d'essuie-glace selon la revendication 1, 2 ou 3, dans lequel ledit axe de charnière est positionné à proximité d'un bord interne de ladite partie de joint (2).

5. Dispositif d'essuie-glace selon la revendication 1, 2 ou 3, dans lequel ledit axe de charnière est positionné à proximité d'un bord externe de ladite partie de joint (2).

6. Dispositif d'essuie-glace selon l'une quelconque des revendications 1 à 5, dans lequel ladite partie de joint (2) a au moins une section transversale sensiblement en forme de U à l'emplacement de son raccordement avec ledit dispositif de raccordement (1), et dans lequel une base de ladite section transversale en forme de U de ladite partie de joint (2) comprend ledit évidement (33) agencé pour loger ladite extrémité libre dudit bras oscillant (19) du troisième type.

7. Dispositif d'essuie-glace selon la revendication 6, dans lequel ladite extrémité libre (42) de ladite partie de joint (2) est résiliente et peut pivoter autour d'un axe de charnière entre une première position pour monter ou démonter ladite extrémité libre du bras oscillant (19) du troisième type dans et dudit évidement (33) dans la base de la section transversale en forme de U de ladite partie de joint (2), et une seconde position pour raccorder ladite extrémité libre du bras oscillant (19) du troisième type à ladite partie de joint (2).

8. Dispositif d'essuie-glace selon l'une quelconque des revendications 1 à 7, dans lequel ledit dispositif de raccordement (1) comprend un canal longitudinal (9) agencé pour recevoir un bras oscillant (21) d'un quatrième type comprenant deux sections de bras longitudinales (39, 40) raccordées entre elles au moyen d'une section intermédiaire incurvée (41).

9. Dispositif d'essuie-glace selon la revendication 8, dans lequel ladite partie de joint (2) a au moins une section transversale sensiblement en forme de U à l'emplacement de son raccordement avec ledit dispositif de raccordement (1), et dans lequel ledit canal longitudinal (9), une base et des pattes (14, 15) de ladite section transversale en forme de U de ladite partie de joint (2) sont agencés pour recevoir une section de bras longitudinale (40) dudit bras oscillant (21) du quatrième type qui, à l'usage, est orientée vers un pare-brise à essuyer.

10. Dispositif d'essuie-glace selon la revendication 8 ou 9, dans lequel ladite extrémité libre (42) de ladite partie de joint (2) est mobile entre une position ouverte dans laquelle ledit balai d'essuie-glace peut être libéré dudit bras oscillant (21) du quatrième type, et une position fermée dans laquelle ledit balai d'essuie-glace peut être retenu sur ledit bras oscillant (21) du quatrième type.

11. Dispositif d'essuie-glace selon la revendication 10, dans lequel ladite extrémité libre (42) de ladite partie de joint (2) peut être articulée entre lesdites positions ouverte et fermée autour d'un axe longitudinal du dispositif d'essuie-glace.

12. Dispositif d'essuie-glace selon l'une quelconque des revendications 1 à 11, dans lequel ledit couvercle (3) est raccordé, de manière détachable, à ladite partie de joint (2) par des saillies de mise en prise (10, 11) dudit dispositif de raccordement (1), à l'emplacement dudit axe de pivot, dans des évidements prévus dans ledit couvercle (3).

13. Dispositif d'essuie-glace selon l'une quelconque des revendications 1 à 12, dans lequel ledit capuchon (34) est raccordé de manière articulée audit couvercle (3) entre une position fermée dans laquelle ledit balai d'essuie-glace est retenu sur ledit bras oscillant (22) du cinquième type et une position ouverte dans laquelle ledit balai d'essuie-glace peut être libéré dudit bras oscillant (22) du cinquième type.

14. Dispositif d'essuie-glace selon l'une quelconque des revendications 1 à 13, dans lequel ledit couvercle (3) a au moins une section transversale sensiblement en forme de U à l'emplacement de son raccordement avec ladite partie de joint (2), et dans lequel ledit évidement (48) est prévu dans une base de la section transversale en forme de U.

15. Dispositif d'essuie-glace selon l'une quelconque des revendications 1 à 14, dans lequel ledit couvercle (3) comprend deux saillies de guidage (38) espacées s'étendant vers le haut à partir d'une surface supérieure dudit couvercle (3), et dans lequel lesdites saillies de guidage (38) sont adaptées pour recevoir ledit bras oscillant (22) du cinquième type entre elles.

16. Dispositif d'essuie-glace selon l'une quelconque des revendications 1 à 15, dans lequel ledit couvercle (3) est raccordé, de manière détachable, à ladite partie de joint (2) par une opération d'encliquetage / fixation.

17. Procédé pour fabriquer un dispositif d'essuie-glace de type à balai plat comprenant un élément de support élastique, allongé, ainsi qu'un balai d'essuie-glace allongé réalisé avec un matériau flexible, qui peut être placé en butée contre un pare-brise à essuyer, lequel balai d'essuie-glace comprend au moins une rainure longitudinale, comprenant l'étape consistant à disposer une bande longitudinale de l'élément de support dans ladite rainure, lequel dispositif d'essuie-glace comprend un dispositif de raccordement (1) pour un bras oscillant, dans lequel ledit bras oscillant peut être raccordé, de manière pivotante, audit dispositif de raccordement (1) autour d'un axe de pivot à proximité d'une extrémité libre dudit bras oscillant, avec l'interposition d'une partie de joint (2), dans lequel le procédé comprend en outre l'étape consistant à raccorder, de manière détachable, ladite partie de joint (2) audit dispositif de raccordement (1) par des saillies de mise en prise (10, 11) dudit dispositif de raccordement (1), à l'emplacement dudit axe de pivot, dans des évidements (12, 13) prévus dans ladite partie de joint (2), dans lequel lesdites saillies (10, 11) dudit dispositif de raccordement (1) sont prévues avec des trous débouchants coaxiaux (16), dans lequel :
- une surface supérieure de ladite partie de joint (2) comprend un évidement (28) agencé pour loger un épaulement en forme de L (26) prévu à proximité de ladite extrémité libre d'un bras oscillant (17) d'un premier type, dans lequel lesdits trous débouchants coaxiaux (16) sont agencés pour recevoir une broche de pivot transversale (27) prévue à proximité de ladite extrémité libre dudit bras oscillant (17) du premier type, et dans lequel un côté de ladite partie de joint (2) est agencé pour venir en butée contre une patte (29) dudit épaulement en forme de L (26) disposée au niveau de son extrémité et faisant face à un pare-brise à essuyer ;
- ladite partie de joint (2) comprend au moins une languette résiliente (24) agencée pour se mettre en prise dans un trou (25) formé de manière correspondante, prévu dans une base d'une section transversale en forme de U d'un bras oscillant (18) d'un deuxième type, dans lequel ladite languette résiliente (24) peut être articulée autour d'un axe de charnière entre une position vers l'intérieur dans laquelle ledit balai d'essuie-glace peut être libéré dudit bras oscillant (18) du deuxième type, et une position vers l'extérieur dans laquelle ledit balai d'essuie-glace peut être retenu sur ledit bras oscillant (18) du deuxième type ;
- ladite partie de joint (2) est prévue avec une extrémité libre (42) ayant un évidement (33) agencé pour loger ladite extrémité libre d'un bras oscillant (19) d'un troisième type, dans lequel ladite partie de joint (2) comprend au moins une saillie (30) s'étendant latéralement à partir d'un côté longitudinal de ladite partie de joint (2), ladite saillie (30) étant agencée pour s'accrocher derrière une saillie (31) formée de manière correspondante, sur ledit bras oscillant (19) du troisième type pour empêcher un mouvement longitudinal dudit balai d'essuie-glace par rapport audit bras oscillant (19) du troisième type, dans lequel un couvercle (3) est raccordé, de manière détachable, à ladite partie de joint (2), dans lequel une surface supérieure dudit couvercle (3) comprend un évidement (48) agencé pour loger :
- un bras oscillant en forme de tige (22) d'un cinquième type ;
- un épaulement en forme de L (26) à proximité de ladite extrémité libre d'un bras oscillant (17) du premier type,
- dans lequel ledit couvercle comprend un capuchon (34) prévu avec une saillie (35) s'étendant, à l'usage, dans une direction descendante vers un pare-brise à essuyer, et dans lequel ladite saillie (35) s'étendant vers le bas est adaptée pour se mettre en prise dans un trou (36) formé de manière correspondante prévu dans ledit bras oscillant (22) du cinquième type pour retenir ledit balai d'essuie-glace sur ledit bras oscillant (22) du cinquième type.
